# EUROPEAN PATENT SPECIFICATION

(11) **EP 2 318 179 B1**
(45) Date of publication and mention of the grant of the patent: **15.08.2012**
(21) Application number: 09769187.7
(22) Date of filing: 19.06.2009
(51) Int. Cl.: B23Q 3/154, B23Q 7/04

(54) **APPARATUS FOR CORRECTLY CENTERING ON THE GRIPPER OF THE VERTICAL SPINDLE OF A MACHINE TOOL WORKPIECES TO BE MACHINED, AND ASSOCIATED OPERATING METHOD**
VORRICHTUNG ZUR ORDNUNGSGEMÄSSEN ZENTRIERUNG VON ZU BEARBEITENDEN WERKSTÜCKEN AUF DIE VERTIKALE SPINDEL EINER WERKZEUGMASCHINE UND ZUGEHÖRIGES BETRIEBSVERFAHREN
APPAREIL POUR CENTRER CORRECTEMENT DES PIÈCES À USINER, SUR LA PINCE DE L'ARBRE VERTICAL D'UNE MACHINE-OUTIL, ET PROCÉDÉ DE FONCTIONNEMENT CORRESPONDANT

(30) Priority: 26.06.2008 IT BO20080405
(43) Date of publication of application: 11.05.2011
(73) Proprietor: MINGANTI INTERNATIONAL LIMITED, Dublin 2 (IE)
(72) Inventor: CALDANA, Marcus, Lidköping 53157 (SE)
(74) Representative: Porsia, Attilio
(86) International application number: PCT/EP2009/057659
(87) International publication number: WO 2009/156338

(56) References cited:
- EP-A- 0 350 799
- EP-A- 1 393 853
- DE-A1- 3 344 903
- DE-A1- 19 628 556
- JP-A- 2002 260 293
- JP-A- 2003 157 589

## Description

The present invention relates to numerical-control machines for performing turning and/or finishing machining operations on round-shaped workpieces such as bearing rings, brake discs or the like, with positioning of the said workpieces on the faceplate of vertical-axis spindles, designed to firmly retain on it the workpiece with a force of magnetic attraction, namely on so-called magnetic faceplate grippers which do not subject the workpieces to fixing forces of the radial type such as those exerted by so-called self-centring grippers which could instead deform the said workpieces or could give rise to imprecision in centring of the said workpieces relative to the access of the rotating spindle, as a result of the varying wear both of the fixing jaws and of the kinematic mechanisms which connect the jaw-holder slides to the usually centralised means which displaces them radially into the open and closed positions.

In order to position correctly the workpiece on the magnetic horizontal-faceplate grippers of a numerical-control processing machine, at present self-centring mechanical grippers are used, these being mounted on precision translation/elevation means, generally associated with the same-named means which carry the machining and control components of the machine tool, for gripping and centring on these grippers the workpiece to be machined and for positioning with correct centring the workpiece on the axis of the magnetic faceplate, owing to the precision with which the mechanical gripper may perform the various translation/elevation movements. After the workpiece has been positioned and centred on the magnetic faceplate, the latter is activated so as to retain magnetically the workpiece itself which in synchronism is released by the said mechanical feed gripper and taken over by the control and machining means of the machine tool. After machining, the workpiece is unloaded from the faceplate by the action of special means, while in synchronism a new workpiece to be machined is inserted on the same faceplate by the said loading and centring gripper.

When the workpieces to be machined are large in size and very heavy, the aforementioned centring technology becomes the source of problems since the said mechanical loading and centring grippers must exert on the said workpieces considerable forces which could deform the gripper/workpiece contact surfaces and could cause gradual wear and consequent centring imprecision in the said grippers.

In order to solve this problem the known art teaches the possibility of associating magnetic self-centring grippers with the magnetic faceplates, with the sole aim of correctly centring the workpiece on the faceplate when the latter is temporarily deenergised, as for example described in the patent US 2,274,481. This solution does not, however, fully solve the problems since, even when having to perform only the radial displacement of the workpiece supported on the faceplate, the force for initial separation and subsequent displacement exerted by the gripper jaws, in relation to the weight of the workpiece, is considerable and may gradually be the source of wear and imprecision of the type already mentioned for the self-centring grippers. Also, the solutions described in the Japanese patents JP2002260293 and JP2003157589, forming the base of the preambles of claims 1 and 13 which envisage the use of centring means situated laterally with respect to the magnetic faceplate, so as to exert on the workpiece radial thrusts for centring on the said rotatable faceplate, cannot be easily applied to workpieces which are large in size, very heavy and in particular have variable dimensions.

The invention aims to overcome these and all the problems and drawbacks of the known art with the apparatus described in Claim 1 and in the following dependent claims, based on the following proposed solution. At least the step of loading the workpiece onto the magnetic faceplate gripper is performed by means of a manipulator, also of the magnetic type, which is mounted on electronic-control translation/elevation means which are therefore very precise. According to a preferred embodiment, the magnetic manipulator moves with precision along a first horizontal axis, with its centre lying in a vertical plane containing the axis of the magnetic machining gripper, and also moves with precision along a second vertical axis and by means of special software; the movement of the said magnetic manipulator may be combined, namely may be performed simultaneously both along the horizontal and along the vertical. At one end of the machine, in a direction perpendicular to the said horizontal axis of displacement of the magnetic manipulator, horizontal displacement of an external carriage is envisaged, said carriage having, mounted thereon, in succession, a horizontal table for initially supporting the workpiece to be machined and a horizontal rollerway, with the rollers parallel to said horizontal axis of displacement of the external carriage, which is operated by means which cause its alternating movement into two different positions, i.e. into one position where the rollerway is aligned with the horizontal axis of movement of the magnetic manipulator, in order to receive from the latter the machined workpiece, and into the other position where it is the table with the workpiece to be machined which is situated opposite the horizontal axis of movement of the magnetic manipulator, while the rollerway with the machined workpiece is in a position aligned with an unloading rollerway, so as to allowing conveying away of the said machined workpiece via the latter.

Correct centring of the workpiece to be machined on the magnetic faceplate gripper may be performed in different ways, after the workpiece to be machined has been positioned on the said magnetic gripper or before transfer onto the latter. In the first case, the workpiece is positioned on the said table of the external carriage on which it is approximately centred with the aid also of any radial or circumferential markings present thereon. The workpiece is then transferred from the external carriage into the take-up station by means of the magnetic manipulator and by this component is then transferred and positioned onto the magnetic faceplate gripper where, by means of at least one peripheral feeler, the amount of any misalignment of the workpiece itself is detected by sensing three or more mutually angularly equidistant points of a zone of the workpiece, and the diameter or other related function of the workpiece is detected. Any misalignment is then positioned in the plane which contains the horizontal axis of displacement of the magnetic manipulator and this component intervenes so as to raise and lower the workpiece and centre it correctly on the magnetic faceplate gripper which in synchronism is deactivated and activated again and which then carries out the necessary mechanical machining of the workpiece, following which the same magnetic manipulator intervenes again in order to unload the workpiece onto the said rollerway of the external carriage and then pick up the next workpiece to be machined from the said table associated with this external carriage.

In another case, any misalignment between the workpiece and the said first external table is detected by means of a sensor also of the static type with which the diameter of the said workpiece may also be detected. With rotation of the said table for initial positioning of the workpiece, any misalignment is oriented along the horizontal axis of displacement of the external carriage and the subsequent translatory movement of the latter takes into account the misalignment detected and positions the centre of the workpiece exactly in the ideal vertical plane which contains the horizontal axis of displacement and the centre of the magnetic manipulator such that, when the latter intervenes, the workpiece is already correctly centred on the manipulator which then transfers it with a fixed stroke and in perfect alignment onto the magnetic machining gripper.

According to another solution, the magnetic manipulator may be preset so as to be able to rotate about its vertical axis and means may be envisaged for ensuring that misalignment between the axis of the workpiece and the axis of rotation of the manipulator and the diameter of the said workpiece are detected, while the manipulator performs its stroke for gripping and transferring the workpiece towards the magnetic machining gripper and while it rotates about its vertical axis. This rotation is completed with positioning of the said misalignment in the ideal vertical plane of translation/elevation of the manipulator and therefore with a translation/elevation stroke which, taking into account said misalignment, is able to position the workpiece with its axis in precise alignment with that of the magnetic machining gripper.

The height of the workpiece may be variable and may be detected with precision by opto-electronic means associated with the magnetic manipulator so that the latter may perform with extreme precision the workpiece gripping and release steps and other control steps described further below.

Further characteristic features of the invention and the advantages arising therefrom will appear more clearly from the following description of a preferred embodiment thereof illustrated purely by way of a non-limiting example in the figures of the accompanying sets of drawings in which:
- Fig. 1 is a schematic top plan view of a machine with the apparatus according to the invention;
- Figs. 2 and 3 show a top plan view of the machine according to Figure 1 during successive steps of the cycle for feeding a workpiece onto the magnetic faceplate gripper, with centring of the workpiece on this gripper;
- Fig. 4 illustrates, with parts shown in side elevation and schematically, deposition of the workpiece to be machined onto the magnetic gripper, as per the step of Figure 3;
- Fig. 5 shows a side elevation view of the step where the feeler intervenes in order to detect the diameter of the workpiece and any misalignment of the latter with respect to the magnetic gripper;
- Figs. 6, 7 and 8 illustrate in a top plan view the various working steps of the feeler according to Figure 5;
- Figs. 9 and 10 illustrate in a top plan view the successive steps during which any misalignment of the workpiece is firstly situated on the axis of horizontal displacement of the machine and this misalignment is then eliminated with exact centring of the workpiece on the magnetic gripper by means of the magnetic manipulator;
- Figs. 9a and 10a show a side elevation view of the same steps shown in the aforementioned Figures 9 and 10;
- Fig. 11 shows a side elevation view of possible operation of an electronic instrument for checking whether any residual misalignment of the workpiece centred on the magnetic gripper falls within or is outside of the tolerances envisaged for machining of the said workpiece;
- Fig. 12 shows a side view of machining of the workpiece by one of the tools of the machine;
- Figs. 13, 14, 15 and 16 show a side elevation view of the magnetic manipulator together with the opto-electronic means associated with it for detecting the height of the workpiece to be machined and for other functions;
- Fig. 17 shows a side elevation view of the means for detecting the diameter and the misalignment of the workpiece on the external feed table;
- Figs. 18, 19 and 20 illustrate in plan view the steps for detecting the misalignment between workpiece and external table with the means according to Figure 17;
- Fig. 21 shows in plan view the orientation of the misalignment of the workpiece located on the external table, in the direction of the axis of horizontal displacement of the carriage which carries the said feed table;
- Figs. 22 and 23 illustrate in plan view the step whereby the carriage with the table and the workpiece to be machined is displaced so as to bring the said workpiece into centred alignment with the horizontal displacement of the magnetic manipulator of the machine and the step of subsequent centred positioning of the said workpiece to be machined on the magnetic faceplate gripper;
- Figs. 24, 25 and 26 illustrate in a top plan view the successive operating steps of the magnetic manipulator in the constructional variant where this component is designed to rotate in an intelligent manner about a vertical axis.

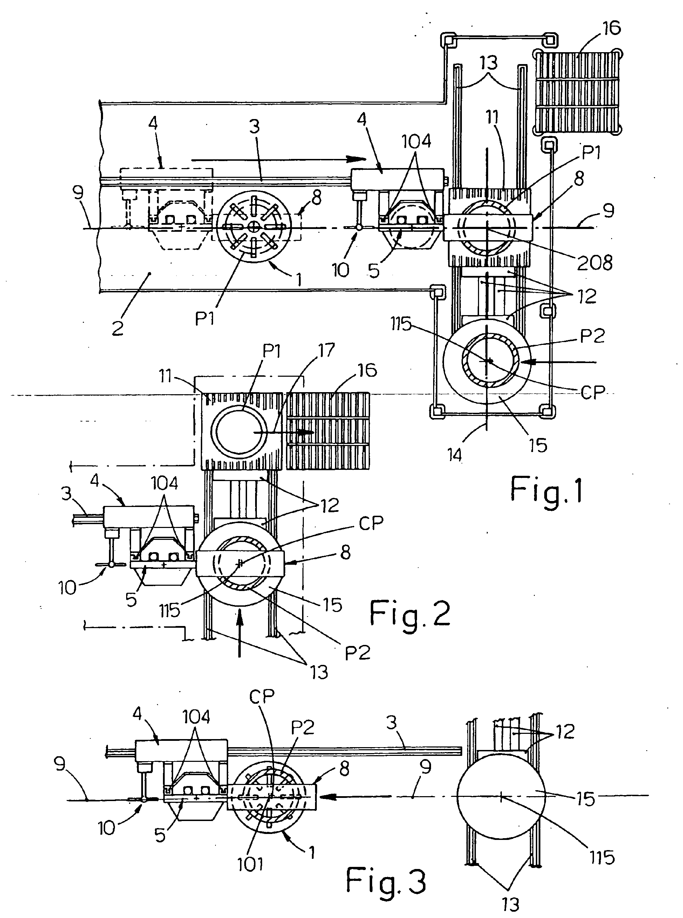

In Figure 1 the reference number 1 denotes the electromagnet faceplate gripper, with a vertical axis, operated by a high-precision intelligent drive unit of the known type which comprises for example an electric motor with electronic speed and phase control and with brake. The gripper 1 is equipped with normal means for enabling energization and de-energization of its electromagnetic function for gripping and release of the ferromagnetic parts to be machined and already machined and is located in the middle part of a straight tank 2 equipped with means for collecting and disposing of the swarf which forms during machining of the workpiece and which in synchronism is moved away from the workpiece and the gripper 1 by known cleaning means (not shown) which use for example pressurised fluid or fluids.

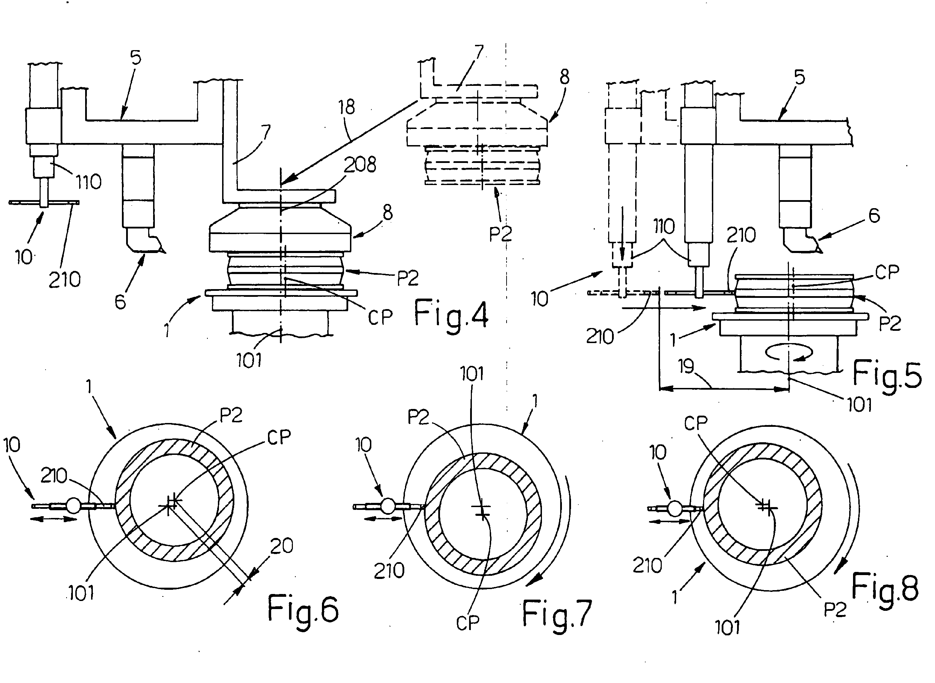

The tank 2 is provided, laterally and/or above and parallel to its longitudinal axis, with straight guiding means 3 along which at least one carriage 4 slides with precision, said carriage being also operated by a high-precision intelligent drive unit which comprises an electronic motor with electronic speed and phase control and with brake. The carriage 4 in turn has vertical guides 104 on which a slide 5 slides with precision, being also operated by a high-precision intelligent drive unit, having an electric motor with electronic speed and phase control, for example of the brushless type and with brake, and this slide 5 has, mounted thereon for example, at least one tool-holder unit 6 (see also Figure 4) and, duly spaced therefrom, an arm 7 which supports an electromagnetic manipulator 8, the bottom face 108 of which is flat and horizontal with a, for example, rectangular shape and the centre 208 of which lies in an ideal vertical plane 9 in which the axis of the electromagnetic gripper 1 also lies (Fig. 1).

The same slide 5 also has, mounted thereon, an arm 110 which can be raised and lowered vertically in the said ideal plane 9, for example a telescopic arm, which supports at the bottom an electronic feeler 10, for example of the type known by the trade name "Remishaw", or of another suitable type, which is connected to a special calculation unit and which will be described in further detail below. The sensing tip or tips 210 of the feeler 10 lie preferably also in the said ideal and vertical plane 9.

In the remainder of the description, the gripper 1 and the manipulator 8 will be defined more simply and to facilitate description as magnetic devices.

By means of the action of the drive means associated with the carriage 4, the magnetic manipulator 8 may be transferred from the position shown in Figure 1 in broken lines, where the said manipulator is situated above the magnetic faceplate gripper 1 and centred with it, for example in order to grip a machined part P1, into the position shown in the same Figure 1 in broken lines, where the said magnetic manipulator 8 is positioned outside one end of the tank 2, above a horizontal service rollerway 11 which is mounted on a carriage 12 which by special drive means may be displaced along straight horizontal guides 13 at right angles to the guides 3 of the machine tool. In synchronism, the manipulator 8 deposits the machined workpiece P1 onto the said rollerway 11, the rollers of which are parallel to the guides 13 and are idle or motor-driven, for the purposes described further below.

The same carriage 12 has, mounted thereon, at a due distance from the rollerway 11 and with its centre 115 in the same ideal vertical plane 14 which contains the centre of the said rollerway 11 and which is at right angles to the ideal plane 9 of the machine, a horizontal table 15 which is fixed or rotatable on a vertical axis and which has, positioned thereon, a workpiece to be machined P2 which undergoes approximate centring, for example by means of the manual intervention of an operator who may, for example, use radial and/or concentric reference marks provided on the said table or using also mechanical means, also not shown, for example of the same type as those present on a self-centring device, which are firstly activated to perform approximate centring of the workpiece and which are then deactivated in order to leave the workpiece free and independent.

By means of the action of the drive means associated with the carriage 12, this carriage may be displaced from the position shown in Figure 1, for loading a new workpiece P2 onto the table 15 and unloading a machined workpiece onto the rollerway 11, into the position shown in Figure 2 where the table 15 with the workpiece P2 is positioned underneath the manipulator 8 and the rollerway 11 is aligned and coplanar with a corresponding rollerway 16 by means of which the workpiece P1 is conveyed away, as indicated by the arrow 17. While unloading of the machined workpiece P1 is performed, the magnetic manipulator 8 moves downwards and grips the workpiece to be machined P2 situated on the table 15, after which it moves upwards and, by means of the action of the carriage 4, moves horizontally along the plane 9 until it reaches the magnetic gripper 1 onto which, in synchronism, it descends downwards and positions delicately and with precision the workpiece to be machined P2 which in synchronised sequence is gripped by the same faceplate gripper 1. In order to reduce the duration of this cycle, since the means for controlling the carriage 4 and the slide 5 know precisely the height of the workpiece to be machined, as will be explained in greater detail below, the approach movement of the manipulator 8 towards the gripper 1 may be performed entirely or partly with a single inclined movement, as indicated by the arrow 18 in Figure 4. When positioning of the workpiece P2 on the magnetic gripper 1 has been completed, the axis CP of the said workpiece usually does not coincide with the vertical axis 101 of the same gripper 1, as shown for example in Figures 5 and 6.

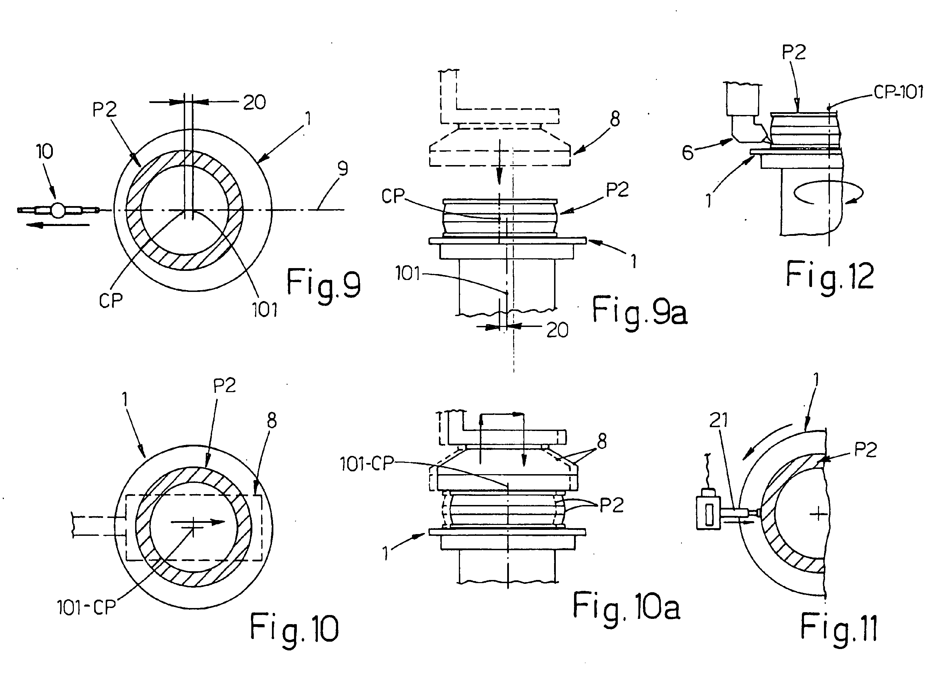

In synchronised sequence, as shown in Figure 5, the means for moving the slide 5 raise all the components associated with it (the manipulator 8 and the tool-holder unit 6), while the arm 110 is lowered as shown in broken lines in same Figure 5 and, in synchronism, the carriage 4 is displaced so as to move away the manipulator 8 from the workpiece P2 and position the sensing point 210 of the feeler 10 at the height of the zone to be sensed of the said workpiece P2 and at a distance 19 from the axis 101 of the gripper 1 which is known and greater than the radius of the larger-diameter workpieces which the machine may machine. In synchronised sequence, as shown in Figure 5 and Figure 6, the carriage 4 is displaced so as to move the feeler 10 towards the workpiece, until the sensor 210 of the same feeler touches the circumference of the workpiece P2 with a desired degree of interference and the stroke performed by the carriage 5 is sent to the calculation means of the machine. In synchronised sequence, the carriage reverses the translatory movement so as to move away conveniently the feeler 10 from the workpiece P2 which is then rotated for example through 120° about the axis 101 of the gripper 1, as shown in Figure 7 and, after this step, the carriage 4 is again displaced so as to move the feeler towards the workpiece P2, in order to detect the radial dimension of the new angular position of the workpiece and the same cycle is repeated in a successive angular position offset at 120° with respect to the previous position, as shown in Figure 8, after which the carriage 4 moves the feeler 10 away from the workpiece and the arm 110 raises it again into the rest position. With the measurements performed by the feeler 10, the calculation unit of the machine is able to detect with a high degree of precision the radius or the diameter of the explored zone of the workpiece to be machined, its misalignment 20 relative to the axis of rotation of the gripper 1 and the angular position of this misalignment and the axis CP of the workpiece P2. This data, via a suitable software, is then used to ensure that, with controlled and precise rotation of the magnetic gripper 1, the axis of the workpiece CP is brought into the ideal vertical plane 9, as shown in Figure 9. In synchronised sequence, the carriage 4 is displaced so as to move the magnetic manipulator 8 towards the workpiece P2 and, also by means of the action of the carriage 5, the same manipulator 8 is moved downwards so as to grip the workpiece P2 while, in synchronism, it is released by the gripper 1. By means of the magnetic manipulator 8 the workpiece P2 is raised and is displaced horizontally in the plane 9 by an amount related to the said misalignment 20, following which the said manipulator moves downwards and repositions the workpiece P2 on the gripper 1, exactly with the centre CP of the workpiece aligned with the axis 101 of the magnetic gripper 1, as shown in the sequence of Figures 9, 9a and 10, 10a. In strict synchronised sequence the gripper 1 is activated magnetically so as to retain the workpiece P2, which is then released by the manipulator 8 which is moved away from the slide 5 and the carriage 4, so as to allow machining of the said workpiece P2 on the rotating magnetic gripper 1 with the aid of the tools associated for example with the arm 6, as shown schematically in Figure 12. Before this machining step, as shown in Figure 11, the possible intervention of a digital comparator 21 associated for example with the slide 5 may be envisaged, so as to make contact with a point of the circumference of the workpiece P2 centred with the aforementioned method, in order to verify whether any residual misalignment or ovalisation of the workpiece P2 are within the permitted machining tolerances, while the same workpiece P2 is rotated slowly around the combined axes CP and 101.

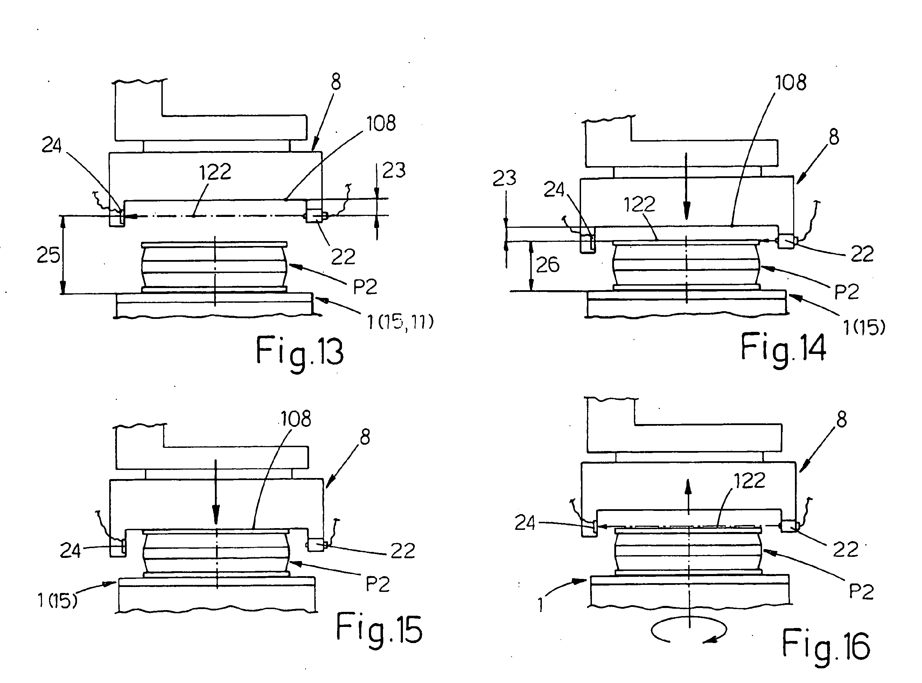

With reference to Figures 13 to 15 the solution which allows precise detection of the height of the workpieces being machined, both for machining of the workpiece and precise handling thereof by the manipulator 8, is now described. From Figure 13 it can be seen that at the opposite front and rear ends of the magnetic manipulator 8 there are provided, for example in the direction of horizontal displacement of this component, suitably projecting from the bottom flat surface 108 of the same component, on one side, an emitter 22 which generates a thin laser beam 122 parallel to the said bottom surface 108 of the manipulator and separated from the latter by a known amount 23, and on the opposite side to the emitter, a receiver 24 which receives said beam. These opto-electronic components 22 and 24 are connected to a calculation circuit of the machine and the entire assembly is used in the manner and for the purposes indicated below. From Figure 13 it can be seen that, when the manipulator 8 is situated above the workpiece to be machined P2 situated in turn on the table 15, as already mentioned for example for the step illustrated in Figure 1, the laser beam 122 is situated at a distance from the top surface of the said table 15 equal to an amount 25 which is known to the machine calculation system. Consequently, when the manipulator 8 is lowered onto the workpiece and the laser beam 122 is interrupted by the top surface of the workpiece P2, as shown in Figure 14, the machine calculation system knows precisely the height 26 of the said workpiece P2. Since the calculation system also knows the said distance 23, it is able to manage the stroke and the speed of the manipulator 8 along the last section of its downward movement such that contact of the bottom surface of the said manipulator 8 with the top surface of the workpiece P2 occurs with a deceleration such that the speed of contact is substantially equal to zero and therefore without the workpiece P2 being subject to any undesirable thrusting forces, as shown in the step illustrated in Figure 15.

At this point it is evident that, when the magnetic manipulator 8 returns into the raised position shown in Figure 13, with the workpiece P2 fixed to its bottom surface 108, the machine calculation system, knowing the height of the said workpiece P2, is also able to manage precisely the subsequent steps where the workpiece P2 is deposited onto the magnetic gripper 1 and the subsequent step where the machined workpiece P1 is picked up from the same gripper 1, as well as the final step where the machined workpiece P1 is deposited on the unloading rollerway 11.

Figure 16 shows an advantageous embodiment of the invention in which, after the magnetic manipulator 8 has positioned the workpiece to be machined P2 on the magnetic gripper 1, when the said manipulator is de-energized and raised, instead of returning immediately into its raised rest position, it may be temporarily stopped in a standby position where the laser beam 122 is situated above and very close to the top surface of the workpiece P2 and is detected by the receiver 24. In this condition, the gripper 1 is rotated about its axis and, if the receiver 24 detects excessive or anomalous oscillations when receiving the beam 122, these conditions are noted by the calculation and processing system of the machine which may interpret them as an indication of incorrect positioning of the workpiece on the gripper 1, probably due to the presence of foreign matter, for example swarf, between the top surface of the faceplate of the said magnetic gripper 1 and the bottom surface of the workpiece to be machined, or macroscopic defects at the top and/or bottom of the said workpiece. In these situations, the machine may be set so as to remove and unload the incorrectly positioned or defective workpiece, indicating this suitably in any practical manner, or may be preset to perform recovery of the said workpiece, temporarily parking it in a cleaning station (not shown), and then reposition it on the gripper 1 which in the meantime has been de-energized and also suitably cleaned. If, during the following cycle for repositioning of the workpiece on the gripper 1, the machine should detect a repetition of the aforementioned problem, the workpiece may be conveyed away for unloading and this may be indicated by any procedure suitable for the purpose. If, subsequently, this same problem should be repeated several times in quick succession during loading of different workpieces, safety means may be envisaged for ensuring that the machine signals the problem to the operator and stops.

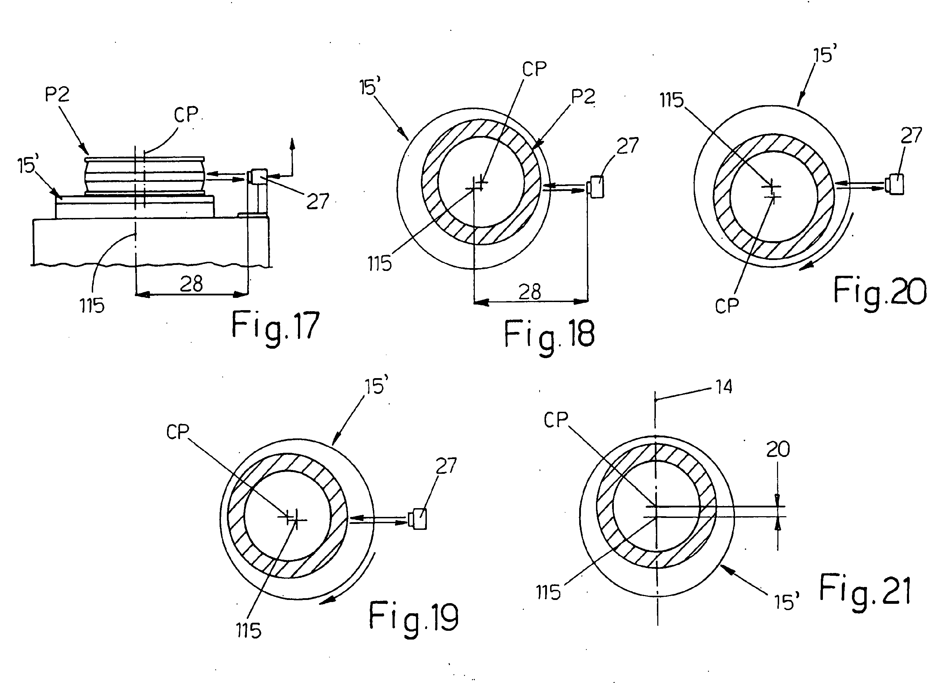

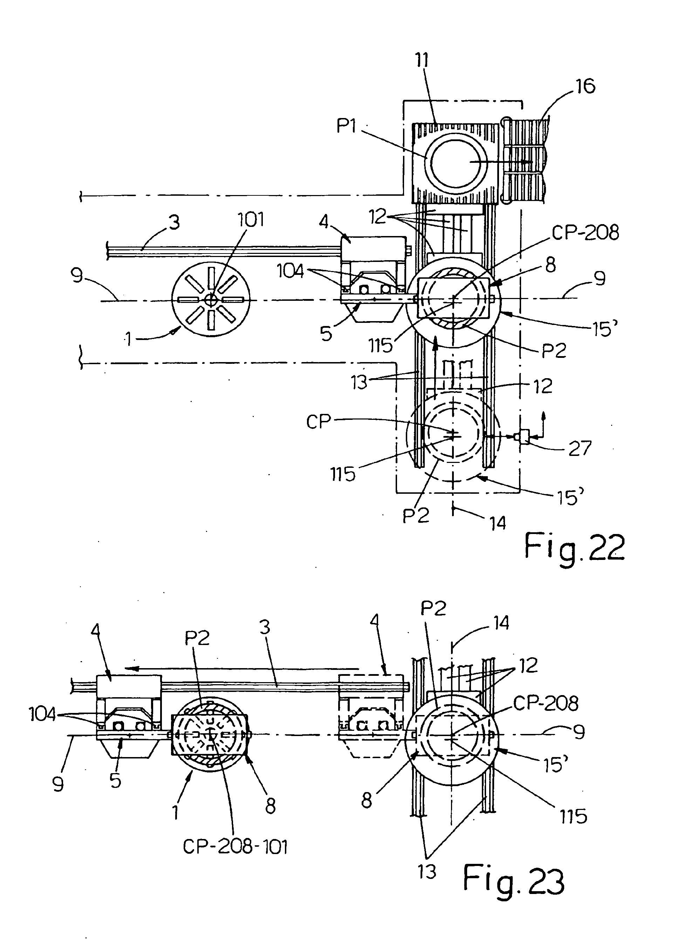

According to a different embodiment of the invention, as described below with reference to Figures 17 to 23, the detection of the radius or the diameter of the workpiece to be machined and misalignment thereof may be performed outside of the machine, for example when the workpiece is mounted on a variant 15' of the said table 15. From Figures 22, 17 and 18 it can be seen that the table 15' differs from the previous table 15 for initial positioning of the workpiece to be machined, in that it must necessarily rotate about its vertical axis 115, in that it performs intelligent rotation, controlled for example by an electric motor with electronic speed and phase control with brake, and in that it is equipped with means for securely holding the workpiece, in particular when the latter is of limited weight, for example magnetic gripping means, similar to the faceplate gripper 1. On one side of the table 15', in a position which is fixed or associated with the carriage 12, means are provided for detecting precisely the diameter of the workpiece to be machined, which is positioned on the said table, using a method similar to that used by the said sensor 10 operating in the working station of the machine. In this case (Fig. 17) it is possible to use a sensor or detector of the static and simplified type, for example a laser sensor 27, which is situated with its exploration beam perpendicular to the axis 115 of the table 15' and which is separated from this axis 28 by a predetermined and known amount 28. As shown in succession in Figures 18, 19 and 20, with the successive rotation through 120° of the table 15' about its axis or with the continuous rotation of the said table through at least one complete revolution, the electronic calculation and processing means associated with the sensor 27 and the intelligent rotation unit of the said table are able to detect the external diameter of the workpiece P2, its eccentricity or misalignment 20 relative to the axis of the said table 15' and the position of this misalignment in the round angle, all of which so that, after the working step of the sensor 27, similar to that envisaged in the cycle for orientation of the workpiece in the machine, the table 15' is rotated automatically by an amount which is known to the system and such that the axis CP of the workpiece is positioned in the ideal plane 14 which contains the centre 115 of the table 15 and the centre of the rollerway 11, as shown in Figures 21 and 22. In this solution it is envisaged that the system for alternating displacement of the carriage 12 is of the intelligent and precise type and is therefore controlled by a motor with electronic speed and phase control, which interacts with the aforementioned system, so that the subsequent linear displacement of the said carriage 12 along the ideal plane 14 takes account of said misalignment 20 of the workpiece on the table 15' and so that the axis CP of the same workpiece is positioned exactly in the ideal plane 9 of the machine in which the centre of the magnetic manipulator 8 and the axis of the magnetic gripper 1 operate, as illustrated in Figure 22. It is clear at this point how the magnetic manipulator 8 is able to grip the workpiece to be machined P2 from the table 15', which automatically releases the said workpiece, with great precision and perfect alignment of the axes of the two parts, as indicated in Figure 22 by the continuous lines, and it is also clear how, as a result of these conditions, the magnetic manipulator 8 is able to transfer with a fixed and predetermined stroke the workpiece P2 from the table 15' to the magnetic gripper 1, ensuring the perfect axial centring of the workpiece P2 and the said gripper 1, as shown in Figure 23 by the sequence of steps indicated firstly in broken lines and then in continuous lines.

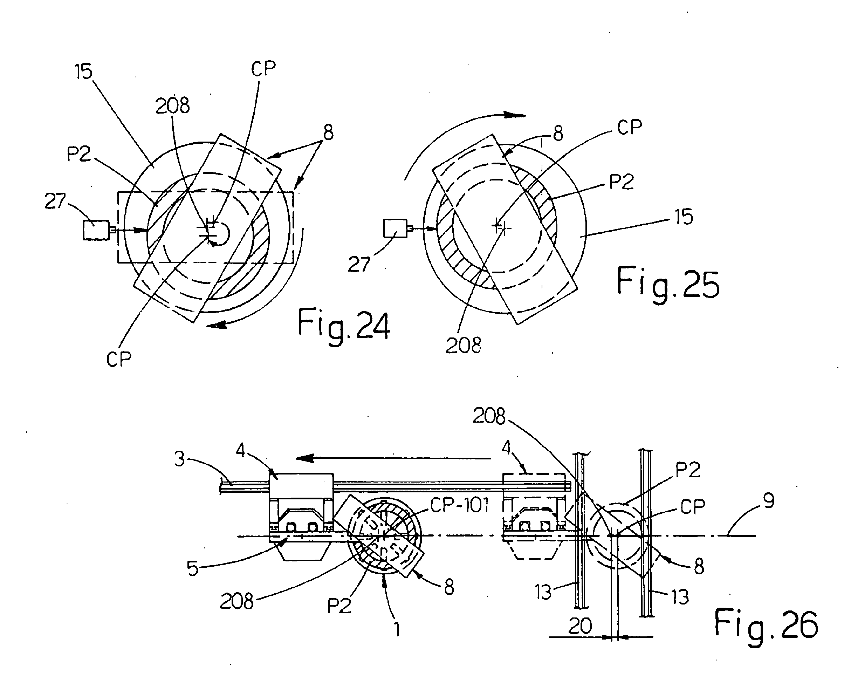

The variation of embodiment considered hitherto, owing to the necessary constructional complications of the table 15', suggests a further constructional variant which is now described with reference to Figures 24 to 26 and which consists in assigning to the magnetic manipulator 8 the function of detecting and orienting the misalignment of the workpiece in the ideal plane 9 of translation/elevation of the said manipulator. According to this variant, the magnetic manipulator 8 may be preset to rotate in an intelligent manner about its vertical axis for example coinciding with its centre 208. The first steps of the new working cycle of the machine are the same as those shown in Figures 1 and 2, since the workpiece P2 reaches the designed point of encounter with the manipulator 8 with a random orientation of its axis. In this case, however, a sensor, for example of the static type, such as that indicated by 27 in Figures 17 to 23, is mounted on the slide 5 which supports the manipulator 8, or in another suitable position, said sensor being able to detect the diameter and the misalignment of the workpiece, after the said workpiece has been gripped by the manipulator 8, duly raised from the loading table 15 and while it is being rotated about the vertical axis 208 of the said manipulator, as illustrated in the sequence of Figures 24, 25 and in the part shown in broken lines in Figure 26, where it can be seen that the said manipulator completes its rotation, aligning the misalignment 20 of the workpiece in the ideal plane 9 of translation/elevation. The horizontal translatory movement of the manipulator 8 will in this case be controlled by intelligent means and will not be fixed as in the other two aforementioned cases, but will be variable depending on the misalignment 20 detected, so that the manipulator 8, during the subsequent translatory stroke towards the magnetic gripper 1, is able to position the workpiece to be machined with its axis CP exactly aligned with the vertical axis 101 of the said gripper 1, as shown in continuous lines in Figure 26, with cycle times shorter than those of the first solution and substantially similar to those of the second solution. In order to reduce the cycle times, if the sensor 27 is mounted on the slide 5, the said rotational steps of the magnetic manipulator 8 about its axis may be performed during the active translation/elevation stroke of the said manipulator along the ideal plane 9.

## Claims

1. A numerical-control machine tool for performing turning and/or finishing operations on round-shaped and also large-size and heavy workpieces (P2) with an apparatus for correctly centring the workpiece on the horizontal, magnetic, faceplate gripper (1) of a vertical-axis spindle of the machine tool **characterized in that** it comprises at least one manipulator (8) with a bottom attraction surface of the magnetic type which is preferably and fundamentally horizontal, associated with special electronic-control translation and elevation means (3, 4, 104, 5), so as to perform at least loading of the workpiece to be machined (P2) onto the said magnetic faceplate (1), gripping the said workpiece from above and performing, positioning of the said workpiece with precise axial alignment on the said magnetic machining gripper.

2. Apparatus according to Claim 1, **characterized in that** the said magnetic manipulator (8) is supported by intelligent and precise, vertical, electronic-control movement means (5, 104) which are in turn mounted on a movable carriage (4) in an intelligent and precise manner, with electronic-control means, on a horizontal guide (3), all of which so that a predetermined or central vertical axis (208) of the manipulator (8) is able to move in an ideal vertical plane (9) containing the axis of the magnetic faceplate gripper (1) for machining the workpiece.

3. Apparatus according to Claim 2, **characterized in that** one end of the horizontal extension of the said ideal vertical plane (9) is provided with any suitable means for positioning the workpiece to be machined (P2) horizontally and with its vertical axis (CP) in a position sufficiently close to the said ideal plane (9) so that the said workpiece may be gripped without excessive misalignment by the said magnetic manipulator (8), there being envisaged means for ensuring that correct centring of the workpiece to be machined, relative to the axis of the magnetic faceplate gripper (1), may be performed directly on the said magnetic gripper (1) with suitable intervention by the said magnetic manipulator (8).

4. Apparatus according to Claim 3, **characterized in that** it comprises at least one feeler (10) with associated calculation means which, when the workpiece to be machined (P2) has been loaded by the magnetic manipulator (8) onto the magnetic faceplate gripper (1) and is retained by the latter while the said manipulator releases the workpiece and suitably moves away from the latter, detects the position, relative to a known point in space, for example relative to the axis of rotation of the magnetic gripper (1), of at least three peripheral and mutually angularly equidistant points of a predefined zone of the workpiece (P2) which in synchronism is rotated together with the gripper (1), all of which so as to detect the amount of any misaligned positioning (20) of the said workpiece and preferably detect also the diameter or other related function of the said sensed zone of the said workpiece, there being envisaged means which in succession move the said feeler (10) away into a rest position and which in synchronism cause rotation of the magnetic gripper (1) by an amount known to the calculation system and such that any said misalignment (20) is positioned in the ideal vertical plane (9) which contains the axis of the said magnetic gripper (1) and the centre (208) of the magnetic manipulator (8), the latter then intervening to raise and lower again the workpiece and correctly centre it on the magnetic gripper (1), with a displacement along the horizontal axis, by an amount related to the said misalignment (20).

5. Apparatus according to Claim 4, **characterized in that** the said feeler (10) is mounted on the same vertical-movement slide (5) which carries the magnetic manipulator (8) and is mounted on associated raising and lowering means (110) so as to be in a raised rest position when the said manipulator (8) or the station with the tools (6) for machining the workpiece are operating and so as to be able to assume instead a low and active position when the magnetic manipulator (8) and the tools (6) are in a raised rest position.

6. Apparatus according to Claim 2, **characterized in that**, perpendicularly with respect to the first ideal vertical plane (9) which contains the vertical axis of rotation of the magnetic gripper (1) and the vertical axis which passes through the centre (208) of the magnetic manipulator (8), a second ideal vertical plane (14) is provided, along which plane the centre (115) of a horizontal table (15) for supporting the workpiece to be machined (P2) and the centre of a horizontal rollerway (11) or of other suitable means are positioned, these both being mounted, in succession, on a carriage (12) which is moved by special means on horizontal guides (13) into two different alternating positions, i.e. into one position where the centre of the said rollerway (11) lies in the said first ideal vertical plane (9) for receiving from the magnetic manipulator (8) the machined workpiece (P1) previously picked up by the said manipulator from the magnetic machining gripper (1), and into another position where it is the said table (15) with the workpiece to be machined (P2) which is situated opposite the said ideal vertical plane (9) for movement of the magnetic manipulator (8) which, in synchronism, picks up the workpiece (P2) in order to load it on the said magnetic gripper (1), while the said rollerway (11) with the machined workpiece (P1) is in a position aligned with an unloading rollerway (16) or other suitable means, in order to allow conveying away of the said machined workpiece (P1) by the latter.

7. Apparatus according to Claim 6, **characterized in that** the said table (15) is provided with radial and/or circular and concentric reference marks and any numbered and/or graduated scales in order to facilitate approximate centring thereon of the workpiece to be machined (P2).

8. Apparatus according to Claim 6, **characterized in that** the said carriage (12) which carries the table (15) and the said rollerway (11) is movable horizontally with a fixed stroke.

9. Apparatus according to Claim 6, **characterized in that**, according to a different embodiment, the said table (15') for initially positioning the workpiece is rotatable about its vertical axis (115), is rotated by a motor with electronic speed and phase control and is provided with means for firmly retaining the workpiece thereon, for example magnetic type means, all of which in a manner similar to that envisaged for the said magnetic machining gripper (1), there being provided at least one sensor (27), also of the static type, with associated calculation means, which is mounted in a fixed position or on the said carriage (12) and which, in combination with rotation of the said table (15') and the associated calculation means, detects the amount of misalignment (20) of the workpiece to be machined (P2) positioned on the said table (15') and detects the diameter or other related function of the said workpiece, and means are envisaged for ensuring that after the said detection step, by means of suitable rotation of the table (15'), the said misalignment (20) is positioned in the said second ideal vertical plane (14), and the external carriage (12) which carries the table (15') being actuated, during its horizontal translatory movement, by a precise and intelligent drive unit which takes into account the amount of said misalignment and which is able to position the table with the centre (CP) of the workpiece (P2) exactly in the said first ideal vertical plane (9) which contains the horizontal axis of displacement and the centre of the magnetic manipulator (8) such that, when the latter intervenes, the workpiece is already correctly centred on the manipulator and therefore also relative to the axis of rotation of the magnetic faceplate gripper (1) on which the workpiece will be subsequently positioned with a fixed stroke by the said magnetic manipulator (8).

10. Apparatus according to Claim 6, **characterized in that**, according to a different embodiment, the magnetic manipulator (8) is preset so as to rotate in an intelligent manner about a vertical axis coinciding, for example, with its centre (208) and also its horizontal translatory movement is preset in an intelligent and precise manner, while a sensor (27) able to detect the diameter and the misalignment of the workpiece (20) is provided on the carriage (5) which supports the said manipulator (8) or in another suitable position, while the said workpiece is rotated about the vertical axis of the manipulator which terminates its said rotation by aligning the misalignment of the said workpiece in the ideal vertical plane (9) of translation/elevation of the magnetic manipulator (8), the horizontal translatory movement of which is controlled by intelligent precision means which move it with a variable horizontal stroke related to the said misalignment (20), all of which so that, at the end of this stroke, the magnetic manipulator (8) is able to position the workpiece to be machined with its axis (CP) exactly aligned with the vertical axis (101) of the magnetic gripper (1).

11. Apparatus according to Claim 1, **characterized in that**, in order to be able to operate on parts of varying height, detect this height and ensure that the magnetic manipulator (8) is able to perform with precision the workpiece pick-up and unloading strokes, the bottom surface (108) of the said manipulator is provided, at a suitable distance (23) from this surface (108), with opto-electronic means (22, 24) connected to associated calculation means which, during the downward stroke of the manipulator, detect the top of the workpiece.

12. Apparatus according to Claim 11, **characterized in that** it comprises means for ensuring that, after the centred positioning of the workpiece to be machined (P2) on the magnetic machining gripper (1), the magnetic manipulator (8) is parked briefly above the said workpiece, while the latter is rotated by the gripper, all of which so that the opto-electronic means (22,24) situated on the said manipulator are able, where necessary, to detect any oscillations on the top of the workpiece which could arise from incorrect positioning of the said workpiece on the magnetic machining gripper (1) or from macroscopic deformations of the said workpiece, in which case activation of safety means and/or procedures is envisaged.

13. Method for correctly centring on a horizontal, magnetic, faceplate gripper (1) of a vertical-axis spindle of a numerical-control machine tool for performing turning and/or finishing machining operations, on round-shaped and also large-size and heavy workpieces (P2), with an apparatus for correctly centring on the horizontal, magnetic, faceplate gripper (1) of the vertical-axis spindle of the machine tool **characterized by** the following working steps:
- gripping from above the workpieces to be machined (P2) situated in a loading station by means of a magnetic manipulator (8) associated with special electronic-control translation/elevation means (3, 4, 104, 5) for transferring the said workpiece onto the magnetic machining gripper (1);
- detecting the height of the workpieces to be machined so as to carry out, on the basis of said height, workpiece handling and machining steps;
- detecting any misalignment of the workpiece to be machined, relative to any means for temporary rotation thereof, which could consist, alternatively, of the machining gripper (1), an external table (15') or the magnetic manipulator (8) if provided with the possibility of rotation about its vertical axis;
- orienting the detected relative misalignment of the axis (CP) of the workpiece and the axis (101, 115, 208) of the said rotational means along the horizontal extension of an ideal vertical plane (9, 14);
- performing intelligent and precise horizontal displacement of the workpiece to be machined (P2) in one of the said ideal planes (9, 14) with a stroke also related to the said misalignment, so as to correctly centre the said workpiece (P2) directly on the magnetic machining gripper (1) or relative to the centre of the magnetic manipulator (8) so that the latter is able to then transfer and align precisely the said workpiece (P2) on the magnetic gripper (1).

## Patentansprüche

1. Nummerisch gesteuerte Werkzeugmaschine zum Durchführen von Dreh- oder Schleifbearbeitungen an runden und ferner großen und schweren Werkstücken (P2) mit einer Vorrichtung zum korrekten Zentrieren des Werkstückes auf einem horizontalen, magnetischen Planscheibengreifer (1) der Spindel der Werkzeugmaschine mit vertikaler Achse, **dadurch gekennzeichnet, dass** sie einen Förderer (8) mit einer magnetisch wirkenden Unterseite, die vorzugsweise und im wesentlichen horizontal ist, und Hebemittel (3,4,104,5) aufweist, um wenigstens das Laden des zu bearbeitenden Werkstückes (P2) auf der magnetischen Planscheibe (1), das Greifen des Werkstückes von oben und das Positionieren des Werkstückes mit genauer axialer Ausrichtung auf dem magnetischen Bearbeitungsgreifer durchzuführen.

2. Vorrichtung nach Anspruch 1, **dadurch gekennzeichnet, dass** der Magnetförderer (8) durch intelligente und genaue vertikale, elektronisch gesteuerte Bewegungsmittel (5,104) gehalten ist, die ihrerseits auf einem beweglichen Wagen (4) in intelligenter und genauer Weise mit elektronisch gesteuerten Mitteln auf einer horizontalen Führung (3) montiert sind, all dies in einer Weise, dass eine vorbestimmte oder mittige Vertikalachse (208) des Förderers (8) in der Lage ist, sich in einer idealen vertikalen Ebene (9), die die Achse des magnetischen Planscheibengreifers (1) zum Bearbeiten des Werkstückes aufnimmt, zu bewegen.

3. Vorrichtung nach Anspruch 2, **dadurch gekennzeichnet, dass** ein Ende der horizontalen Erstreckung der idealen Vertikalebene (9) mit jeglichen geeigneten Mitteln zum horizontalen Positionieren des zu bearbeitenden Werkstückes (P2) und mit seiner Vertikalachse (CP) in einer Position hinreichend nahe zu der Idealebene (9) vorgesehen sind, so dass das Werkstück ohne übermäßige Fehlausrichtung durch den magnetischen Förderer (8) gegriffen werden kann, wobei Mittel zum Sicherstellen vorgesehen sind, dass das korrekte Zentrieren des zu bearbeitenden Werkstückes relativ zur Achse des magnetischen Planscheibengreifers (1) unmittelbar auf dem Magnetgreifer (1) durch geeignetes Eingreifen des magnetischen Förderers (8) durchgeführt werden kann.

4. Vorrichtung nach Anspruch 3, **dadurch gekennzeichnet, dass** sie wenigstens einen Fühler (10) mit zugehörigen Berechnungsmitteln aufweist, der dann, wenn das zu bearbeitende Werkstück (P2) durch den magnetischen Förderer (8) auf dem magnetischen Planscheibengreifer (1) geladen worden ist und durch letzteren gehalten wird, während der Förderer das Werkstück freigibt und sich in geeigneter Weise von letzterem weg bewegt, die Position relativ zu einem bekannten Punkt im Raum erfasst, beispielsweise relativ zu der Drehachse des magnetischen Greifers (1) zu wenigstens drei über den Umfang und im gegenseitigen Winkel gleich beabstandeten Punkten eines vordefinierten Bereichs des Werkstückes (P2), das synchron gemeinsam mit dem Greifer (1) gedreht wird, **erfasst,** all dies in einer Weise, dass das Ausmaß jeglicher Fehlausrichtung (20) des Werkstückes und vorzugsweise auch der Durchmesser oder eine zugehörige Funktion des gemessenen Bereiches des Werkstückes erfasst wird, wobei Mittel vorgesehen sind, die im Anschluss den Fühler (10) weg in eine Ruhestellung bewegen und die synchron die Rotation des magnetischen Greifers (1) in einem dem Berechnungssystem bekannten Ausmaß bewirken, so dass jegliche Fehlausrichtung (20) in die ideale Vertikalebene (9) positioniert wird, welche die Achse des magnetischen Greifers (1) und die Mitte (208) des magnetischen Förderers (8) aufnimmt, wobei letzterer dann eingreift, um das Werkstück anzuheben und wieder abzusenken und es korrekt auf dem magnetischen Greifer (1) zu zentrieren mit einer Verlagerung entlang der Horizontalachse um ein Maß in Relation zu der Fehlausrichtung (20).

5. Vorrichtung nach Anspruch 4, **dadurch gekennzeichnet, dass** der Fühler auf dem gleichen Träger (5) mit vertikaler Bewegung gleitet, der den magnetischen Förderer (8) trägt und an zugehörigen Hebe- und Senkmitteln (110) derart montiert ist, dass er in einer angehobenen Ruheposition, wenn der Förderer (8) oder die Station mit dem Werkzeug (6) zum Bearbeiten des Werkstückes in Betrieb sind sich in einer angehobenen Ruhestellung befindet, um in der Lage zu sein, stattdessen eine abgesenkte und aktive Stellung einzunehmen, wenn der magnetische Förderer (8) und die Werkzeuge (6) in einer angehobenen Ruhestellung sind.

6. Vorrichtung nach Anspruch 2, **dadurch gekennzeichnet, dass** senkrecht in Bezug auf die erste ideale Vertikalebene (9), die die vertikale Drehachse des magnetischen Greifers (1) und die vertikale Achse aufnimmt, die durch die Mitte (208) des magnetischen Förderers (8) verläuft, eine zweite ideale Vertikalebene (14) vorgesehen ist, entlang derer die Mitte (115) eines horizontalen Tisches (15) zum Abstützen des zu bearbeitenden Werkstückes (P2) und die Mitte einer horizontalen Rollenbahn (11) oder sonstige geeignete Mittel positioniert werden, wobei diese beide im Anschluss auf einem Wagen (12) montiert werden, der durch spezielle Mittel auf horizontalen Führungen (13) in zwei alternierende Positionen, d.h. in eine Position, in welcher die Mitte der Rollenbahn (11) in der ersten idealen Vertikalebene (9) zur Aufnahme des bearbeiteten Werkstückes (P1) von dem magnetischen Förderer (8), das zuvor durch den Förderer von dem magnetischen Bearbeitungsgreifer (1) aufgenommen worden ist, liegt und in eine weitere Position bewegt wird, in welcher der Tisch (15) mit dem zu bearbeitenden Werkstück (P2) der idealen Vertikalebene (9) zur Bewegung des magnetischen Förderers (8) gegenüberliegt, welcher synchron das Werkstück (P2) aufnimmt, um es auf den magnetischen Greifer (1) zu laden, während die Rollenbahn (11) mit dem bearbeiteten Werkstück (P1) sich in einer Stellung fluchtend zu einer Entladerollenbahn (16) oder anderen geeigneten Mitteln befindet, um es zu ermöglichen, das bearbeitete Werkstück (P1) von letzterem weg zu fördern.

7. Vorrichtung nach Anspruch 6, **dadurch gekennzeichnet, dass** der Tisch mit radialen und / oder kreisförmigen oder konzentrischen Bezugszeichen und jeglichen nummerierten oder unterteilten Maßstäben versehen ist, um das ungefähre Zentrieren des zu bearbeitenden Werkstückes (P2) auf im zu vereinfachen.

8. Vorrichtung nach Anspruch 6, **dadurch gekennzeichnet, dass** der Wagen (12), der den Tisch (15) und die Rollenbahn (11) trägt, horizontal um einen feststehenden Hub beweglich ist.

9. Vorrichtung nach Anspruch 6, **dadurch gekennzeichnet, dass** gemäß einer unterschiedlichen Ausführungsform der Tisch (15') zum anfänglichen Positionieren des Werkstückes drehbar um seine Vertikalachse (115) ist, wobei er durch einen Motor mit elektronischer Drehzahl- und Phasensteuerung gedreht wird und mit Mitteln zum festen Halten des Werkstückes auf ihm versehen ist, beispielsweise magnetisch arbeitende Mittel, all dies in einer solchen Weise ähnlich zu dem, was für den magnetischen Bearbeitungsgreifer (1) vorgesehen ist, wobei wenigstens ein Sensor (27) ebenfalls von statischer Art mit zugehörigen Berechnungsmitteln vorgesehen ist, der in einer festen Position oder auf dem Wagen (12) montiert ist und der in Kombination mit der Drehung des Tisches (15') und den zugehörigen Berechnungsmitteln das Maß der Fehlausrichtung (20) des zu bearbeitenden Werkstückes (P2), das auf dem Tisch (15') angeordnet ist, erfasst und den Durchmesser oder eine andere zugehörige Funktion des Werkstückes erfasst, und Mittel zum Sicherstellen vorgesehen sind, dass nach dem Erfassungsschritt mittels einer geeigneten Drehung des Tisches (15 `) die Fehlausrichtung (20) in die zweite ideale Vertikalebene (14) positioniert wird und der äußere Wagen (12), der den Tisch (15') trägt, während seiner horizontalen translatorischen Bewegung durch eine präzise und intelligente Antriebseinrichtung betätigt wird, die das Maß der Fehlausrichtung berücksichtigt und fähig ist, den Tisch mit der Mitte (CP) des Werkstückes (P2) exakt in der ersten idealen Vertikalebene (9) zu positionieren, die die horizontale Achse der Verlagerung und die Mitte des magnetischen Förderers (8) enthält, so dass dann wenn letzterer eingreift, das Werkstück bereits korrekt auf dem Förderer zentriert ist und damit auch relativ zu der Drehachse des magnetischen Planscheibengreifers (1), auf welchem das Werkstück nachfolgend mit einem feststehenden Hub durch den magnetischen Förderer (8) positioniert wird.

10. Vorrichtung nach Anspruch 6, **dadurch gekennzeichnet, dass** gemäß einer unterschiedlichen Ausführungsform der magnetische Förderer (8) derart voreingestellt ist, dass er in einer intelligenten Weise um eine vertikale Achse rotiert, die beispielsweise mit seiner Mitte (208) zusammenfällt und auch seine horizontale translatorische Bewegung in einer intelligenten und genauen Weise voreingestellt ist, während ein Sensor (27), der in der Lage ist, den Durchmesser und die Fehlausrichtung des Werkstückes (20) zu erfassen, auf dem Wagen (5) vorgesehen ist, der den Förderer (8) trägt, oder in einer anderen geeigneten Position vorgesehen ist, während das Werkstück um die Vertikalachse des Förderers gedreht wird, der seine Rotation durch Ausrichten der Fehlausrichtung des Werkstückes in die ideale Vertikalebene (9) der Translation / Elevation des magnetischen Förderers (8) beendet, wobei die horizontale translatorische Bewegung von diesem durch intelligente Präzisionsmittel gesteuert wird, die sie mit einem variablen horizontalen Hub im Verhältnis zu der Fehlausrichtung (20) bewegen, all dies in einer Weise, dass am Ende dieses Hubes der magnetische Förderer (8) in der Lage ist, das zu bearbeitende Werkstück mit seiner Achse (CP) exakt fluchtend mit der Vertikalachse (101) des magnetischen Greifers (1) zu positionieren.

11. Vorrichtung nach Anspruch 1, **dadurch gekennzeichnet, dass** sie, um in der Lage zu sein, mit Teilen von variierender Höhe zu arbeiten, diese Höhe erfasst und sicherstellt, dass der magnetische Förderer (8) in der Lage ist, mit Präzision die Aufnahme des Werkstückes und Entladehübe durchzuführen, wobei die Unterseite (108) des Förderers in einem geeigneten Abstand (23) von dieser Fläche (108) mit optoelektronischen Mitteln (22,24) versehen ist, die an zugehörige Berechnungsmittel angeschlossen sind, die während des Abwärtshubes des Förderers die Oberseite des Werkstückes erfassen.

12. Vorrichtung nach Anspruch 11, **dadurch gekennzeichnet, dass** sie Mittel aufweist, um sicherzustellen, dass nach dem zentrierten Anordnen des zu bearbeitenden Werkstückes (P2) auf dem magnetischen Bearbeitungsgreifer (1) der magnetische Förderer (8) knapp oberhalb des Werkstückes geparkt wird, während letzteres durch den Greifer gedreht wird, all dies in einer Weise, dass die optoelektronischen Mittel (22,24), die an dem Förderer angeordnet sind, falls erforderlich in der Lage sind, jegliche Oszillationen an der Oberseite des Werkstückes zu erfassen, die von einer falschen Positionierung des Werkstückes auf dem magnetischen Bearbeitungsgreifer (1) oder von makroskopischen Deformationen des Werkstückes herrühren könnten, in welchem Fall die Aktivierung von Sicherheitsmitteln und / oder -abläufen vorgesehen ist.

13. Verfahren zum korrekten Zentrieren auf einem horizontalen, magnetischen Planscheibengreifer (1) einer Spindel mit einer vertikalen Achse einer nummerisch gesteuerten Werkzeugmaschine zum Durchführen von Dreh- und / oder Schlichtbearbeitungsvorgängen an runden und zudem großen und schweren Werkstücken (P2) mit einer Vorrichtung zum korrekten Zentrieren auf dem horizontalen, magnetischen Planscheibengreifer (1) der Spindel der Werkzeugmaschine mit vertikaler Achse, **gekennzeichnet durch** die folgenden Arbeitsschritte:
- Greifen von oben des zu bearbeitenden Werkstückes (P2), das sich in einer Ladestation befindet, mittels eines magnetischen Förderers (8), der mit speziellen elektronisch gesteuerten Translations- /Elevationsmitteln (3,4,104,5) zum Übertragen des Werkstückes auf den magnetischen Bearbeitungsgreifer (1) verknüpft ist;
- Erfassen der Höhe des zu bearbeitenden Werkstückes um auf der Basis dieser Höhe die Werkstückhandhabung und -bearbeitungsschritte durchzuführen;
- Erfassen jeglicher Fehlausrichtung des zu bearbeitenden Werkstückes relativ zu beliebigen Mitteln für dessen zeitweise Drehung, die, alternativ, der Bearbeitungsgreifer (1), ein externer Tisch (15') oder der magnetische Förderer (8) sein können wenn die Möglichkeit einer Rotation um die Vertikalachse gegeben ist;
- Ausrichten der erfassten relativen Fehlausrichtung der Achse (CP) des Werkstückes und der Achse (101,115,208) der Rotationsmittel entlang der horizontalen Erstreckung einer idealen Vertikalebene (9,14);
- Durchführen einer intelligenten und genauen horizontalen Verlagerung des zu bearbeitenden Werkstückes (P2) in einer der Idealebenen (9,14) mit einem Hub ebenfalls im Verhältnis zu der Fehlausrichtung, um das Werkstück (P2) unmittelbar auf dem magnetischen Bearbeitungsgreifer (1) oder relativ zu der Mitte des magnetischen Förderers (8) derart zu zentrieren, das letzterer in der Lage ist, dann das Werkstück (P2) auf dem magnetischen Greifer (1) zu übertragen und auszurichten.

## Revendications

1. Machine-outil à commande numérique destinée à effectuer des opérations de tournage et/ou de finition sur des pièces d'ouvrage lourdes et également de grande dimension et de forme arrondie (P2) à l'aide d'un appareil destiné à centrer correctement la pièce d'ouvrage sur l'outil de préhension à plateau magnétique, horizontal (1) d'une broche à axe vertical de la machine-outil, **caractérisée en ce qu'**elle comprend au moins un manipulateur (8) présentant une surface d'attraction inférieure du type magnétique qui est de préférence et de manière fondamentale horizontale, associée à un moyen d'élévation et de translation à commande électronique spéciale (3, 4, 104, 5), de manière à effectuer au moins un chargement de la pièce d'ouvrage devant être usinée (P2) sur ledit plateau magnétique (1), à saisir ladite pièce d'ouvrage depuis le dessus et à effectuer, positionner ladite pièce d'ouvrage selon un alignement axial précis sur ledit outil de préhension d'usinage magnétique.

2. Appareil selon la revendication 1, **caractérisé en ce que** ledit manipulateur magnétique (8) est pris en charge par un moyen de déplacement à commande électronique, vertical, précis et intelligent (5, 104) qui est à son tour monté sur un chariot mobile (4) d'une manière précise et intelligente, avec un moyen à commande électronique, sur un guide horizontal (3), tous permettant qu'un axe vertical central ou prédéterminé (208) du manipulateur (8) est en mesure de se déplacer dans un plan vertical idéal (9) contenant l'axe de l'outil de préhension à plateau magnétique (1) en vue de l'usinage de la pièce d'ouvrage.

3. Appareil selon la revendication 2, **caractérisé en ce qu'**une extrémité de l'extension horizontale dudit plan vertical idéal (9) est dotée d'un moyen approprié destiné à positionner la pièce d'ouvrage devant être usinée (P2) de manière horizontale et avec son axe vertical (CP) dans une position suffisamment proche dudit plan idéal (9) de sorte que ladite pièce d'ouvrage peut être saisie sans mauvais alignement excessif par ledit manipulateur magnétique (8), qui est de cette manière envisagé comme un moyen destiné à assurer qu'un centrage correct de la pièce d'ouvrage devant être usinée, par rapport à l'axe de l'outil de préhension à plateau magnétique (1), peut être effectué directement sur ledit outil de préhension magnétique (1) avec une intervention appropriée dudit manipulateur magnétique (8).

4. Appareil selon la revendication 3, **caractérisé en ce qu'**il comprend au moins une jauge d'épaisseur (10) dotée d'un moyen de calcul associé qui, lorsque la pièce d'ouvrage devant être usinée (P2) a été chargée par le manipulateur magnétique (8) sur l'outil de préhension à plateau magnétique (1) et est retenue par ce dernier alors que ledit manipulateur libère la pièce d'ouvrage et s'écarte de manière appropriée de cette dernière, détecte la position, par rapport à un point connu dans l'espace, par exemple par rapport à l'axe de rotation de l'outil de préhension magnétique (1), d'au moins trois points mutuellement équidistants de manière angulaire et périphériques d'une zone prédéfinie de la pièce d'ouvrage (P2) qui est entraînée en rotation en synchronisation en même temps que l'outil de préhension (1), tous permettant de détecter l'ampleur d'un positionnement mal aligné quelconque (20) de ladite pièce d'ouvrage et de préférence à détecter également le diamètre ou une autre fonction associée de ladite zone détectée de ladite pièce d'ouvrage, qui est ainsi envisagée comme un moyen qui successivement éloigne ladite jauge d'épaisseur (10) vers une position de repos et qui provoque en synchronisation une rotation de l'outil de préhension magnétique (1) selon une ampleur connue du système de calcul et de telle sorte que ledit mauvais alignement quelconque (20) est positionné dans le plan vertical idéal (9) qui contient l'axe dudit outil de préhension magnétique (1) et le centre (208) dudit manipulateur magnétique (8), ce dernier intervenant alors pour élever et abaisser de nouveau la pièce d'ouvrage et pour centrer correctement celle-ci sur l'outil de préhension magnétique (1), à l'aide d'un déplacement le long de l'axe horizontal, selon une ampleur associée audit mauvais alignement (20).

5. Appareil selon la revendication 4, **caractérisé en ce que** ladite jauge d'épaisseur (10) est montée sur la même coulisse à déplacement vertical (5) qui transporte le manipulateur magnétique (8) et est montée sur un moyen d'abaissement et d'élévation associé (110) de manière à être dans une position de repos élevée lorsque ledit manipulateur (8) ou le poste avec les outils (6) destiné à usiner la pièce d'ouvrage fonctionnent et de manière à être en mesure d'adopter à la place une position active et basse lorsque le manipulateur magnétique (8) et les outils (6) sont dans une position de repos élevée.

6. Appareil selon la revendication 2, **caractérisé en ce que**, de manière perpendiculaire par rapport au premier plan vertical idéal (9) qui contient l'axe vertical de rotation de l'outil de préhension magnétique (1) et l'axe vertical qui passe par le centre (208) du manipulateur magnétique (8), est prévu un deuxième plan vertical idéal (14), le long duquel plan le centre (115) d'une table horizontale (15) destinée à supporter la pièce d'ouvrage devant être usinée (P2) et le centre d'un convoyeur à rouleaux horizontal (11) ou d'un autre moyen approprié sont positionnés, ces deux derniers éléments étant montés, à la suite, sur un chariot (12) qui est déplacé par un moyen spécial sur des guides horizontaux (13) vers deux positions en alternance différentes, c'est-à-dire vers une position où le centre dudit convoyeur à rouleaux (11) se situe dans ledit premier plan vertical idéal (9) en vue de recevoir depuis le manipulateur magnétique (8) la pièce d'ouvrage usinée (P1) préalablement prélevée par ledit manipulateur de l'outil de préhension d'usinage magnétique (1), et vers une autre position où se trouve ladite table (15) avec la pièce d'ouvrage devant être usinée (P2) qui est située de manière opposée audit plan vertical idéal (9) en vue d'un déplacement du manipulateur magnétique (8) qui, prélève en synchronisation la pièce d'ouvrage (P2) de manière à la charger sur ledit outil de préhension magnétique (1), alors que ledit convoyeur à rouleaux (11) ayant la pièce d'ouvrage usinée (P1) se trouve dans une position alignée sur un convoyeur à rouleaux de déchargement (16) ou un autre moyen approprié, de manière à pouvoir faire évacuer ladite pièce d'ouvrage usinée (P1) grâce à ce dernier.

7. Appareil selon la revendication 6, **caractérisé en ce que** ladite table (15) est dotée de marques de référence concentriques et circulaires et/ou radiales et d'échelles graduées et/ou numérotées quelconques de manière à faciliter le centrage approximatif sur celle-ci de la pièce d'ouvrage devant être usinée (P2).

8. Appareil selon la revendication 6, **caractérisé en ce que** ledit chariot (12) qui transporte la table (15) et ledit convoyeur à rouleaux (11) est mobile sur le plan horizontal selon une course fixe.

9. Appareil selon la revendication 6, **caractérisé en ce que**, selon un mode de réalisation différent, ladite table (15') destinée à positionner initialement la pièce d'ouvrage peut être entraînée en rotation autour de son axe vertical (115), et entraînée en rotation par un moteur électrique ayant une vitesse électronique et une commande de phase et est dotée d'un moyen destiné à retenir fermement la pièce d'ouvrage sur celle-ci, par exemple un moyen de type magnétique, la totalité d'entre eux étant d'une manière similaire à celle envisagée pour ledit outil de préhension d'usinage magnétique (1), qui est doté ainsi d'au moins un capteur (27), également du type statique, avec un moyen de calcul associé, qui est monté dans une position fixe ou sur ledit chariot (12) et qui, en association avec une rotation de ladite table (15') et le moyen de calcul associé, détecte l'ampleur du mauvais alignement (20) de la pièce d'ouvrage devant être usinée (P2) positionnée sur ladite table (15') et détecte le diamètre ou une autre fonction associée de ladite pièce d'ouvrage, et un moyen est envisagé afin de garantir qu'après ladite étape de détection, à l'aide d'une rotation appropriée de la table (15'), ledit mauvais alignement (20) est positionné dans ledit deuxième plan vertical idéal (14), et le chariot externe (12) qui transporte la table (15') étant actionné, au cours de son déplacement par translation horizontale, par une unité d'entraînement intelligente et précise qui prend en compte l'ampleur dudit mauvais alignement et qui est en mesure de positionner la table avec le centre (CP) de la pièce d'ouvrage (P2) exactement dans ledit premier plan vertical idéal (9) qui contient l'axe horizontal de déplacement et le centre du manipulateur magnétique (8) de telle sorte que, lorsque ce dernier intervient, la pièce d'ouvrage est déjà correctement centrée sur le manipulateur et par conséquent également par rapport à l'axe de rotation de l'outil de préhension à plateau magnétique (1) sur lequel la pièce d'ouvrage sera positionnée par la suite selon une course fixe par ledit manipulateur magnétique (8).

10. Appareil selon la revendication 6, **caractérisé en ce que**, selon un mode de réalisation différent, le manipulateur magnétique (8) est préréglé de manière à être entraîné en rotation d'une manière intelligente autour d'un axe vertical coïncidant, par exemple, avec son centre (208) et également son déplacement par translation horizontale est préréglé d'une manière précise et intelligente, alors qu'un capteur (27) en mesure de détecter le diamètre et le mauvais alignement de la pièce d'ouvrage (20) est prévu sur le chariot (5) qui supporte ledit manipulateur (8) ou dans une autre position appropriée, alors que ladite pièce d'ouvrage est entraînée en rotation autour de l'axe vertical du manipulateur, qui termine sa dite rotation en alignant le mauvais alignement de ladite pièce d'ouvrage dans le plan vertical idéal (9) de translation/d'élévation du manipulateur magnétique(8), dont le déplacement pour translation horizontale est commandé par un moyen de précision intelligent qui le déplace selon une course horizontale variable associée audit mauvais alignement (20), tous permettant que, au niveau de l'extrémité de cette course, le manipulateur magnétique (8) est en mesure de positionner la pièce d'ouvrage devant être usinée avec son axe (CP) exactement aligné sur l'axe vertical (101) de l'outil de préhension magnétique (1).

11. Appareil selon la revendication 1, **caractérisé en ce que**, de manière à être en mesure de fonctionner sur des parties de hauteur variable, détecter cette hauteur et garantir que le manipulateur magnétique (8) est en mesure d'effectuer avec précision les courses de prélèvement et de déchargement de pièce d'ouvrage, la surface inférieure (108) dudit manipulateur est dotée, à une distance appropriée (23) depuis cette surface (108), de moyens optoélectroniques (22, 24) connectés à un moyen de calcul associé qui, au cours de la course descendante du manipulateur, détectent le sommet de la pièce d'ouvrage.

12. Appareil selon la revendication 11, **caractérisé en ce qu'**il comprend un moyen destiné à garantir que, après le positionnement centré de la pièce d'ouvrage devant être usinée (P2) sur l'outil de préhension d'usinage magnétique (1), le manipulateur magnétique (8) est laissé brièvement en stationnement au-dessus de ladite pièce d'ouvrage, alors que cette dernière est entraînée en rotation par l'outil de préhension, tous permettant que les moyens optoélectroniques (22, 24) situés sur ledit manipulateur sont en mesure, lorsque cela est nécessaire, de détecter toutes les oscillations sur le sommet de la pièce d'ouvrage qui pourraient survenir d'un positionnement incorrect de ladite pièce d'ouvrage sur l'outil de préhension d'usinage magnétique (1) ou de déformations macroscopiques de ladite pièce d'ouvrage, auquel cas une activation de moyens et/ou de procédures de sécurité est envisagée.

13. Procédé destiné à centrer correctement sur un outil de préhension à plateau magnétique horizontal (1) d'une broche à axe vertical d'une machine-outil à commande numérique destiné à effectuer des opérations d'usinage de finition et/ou de tournage, sur des pièces d'ouvrage lourdes et également de grande dimension et de forme arrondie (P2), à l'aide d'un appareil destiné à centrer correctement sur l'outil de préhension à plateau magnétique, horizontal (1) de la broche à axe vertical de la machine-outil, **caractérisé par** les étapes d'ouvrage suivantes :
- la préhension depuis le dessus des pièces d'ouvrage devant être usinées (P2) situées dans un poste de chargement à l'aide d'un manipulateur magnétique (8) associé à un moyen de translation/d'élévation à commande électronique spéciale (3, 4, 104, 5) en vue de transférer ladite pièce d'ouvrage sur l'outil de préhension d'usinage magnétique (1);
- la détection de la hauteur des pièces d'ouvrage devant être usinées de manière à effectuer, sur la base de ladite hauteur, des étapes de manipulation et d'usinage de pièces d'ouvrage ;
- la détection d'un mauvais alignement quelconque de la pièce d'ouvrage devant être usinée, par rapport à un moyen quelconque destiné à une rotation temporaire de celle-ci, qui pourrait consister, en variante, en l'outil de préhension d'usinage (1), une table externe (15') ou le manipulateur magnétique (8) s'il est doté de la possibilité de rotation autour de son axe vertical ;
- l'orientation du mauvais alignement relatif détecté de l'axe (CP) de la pièce d'ouvrage et de l'axe (101, 115, 208) dudit moyen rotationnel le long de l'extension horizontale d'un plan vertical idéal (9, 14) ;
- l'exécution d'un déplacement horizontal précis et intelligent de la pièce d'ouvrage devant être usinée (P2) dans l'un desdits plans idéaux (9, 14) selon une course également associée audit mauvais alignement, de manière à centrer correctement ladite pièce d'ouvrage (P2) directement sur l'outil de préhension d'usinage magnétique (1) ou par rapport au centre du manipulateur magnétique (8) de sorte que ce dernier est en mesure de transférer alors et d'aligner précisément ladite pièce d'ouvrage (P2) sur l'outil de préhension magnétique (1).
